# EUROPEAN PATENT APPLICATION

(11) **EP 2 175 407 A1**
(43) Date of publication of application: **14.04.2010**
(21) Application number: 08791228.3
(22) Date of filing: 16.07.2008
(51) Int. Cl.: G06Q 30/00, A47F 3/00, G06Q 10/00, G06Q 50/00

(54) **COMMERCIAL PRODUCT INFORMATION DISPLAY SYSTEM**

(30) Priority: 30.07.2007 JP 2007197354
(71) Applicant: Sanden Corporation, Isesaki-shi, Gunma 372-8502 (JP)
(72) Inventor: KUWAKO, Yuuji, Isesaki-shi Gunma 372-8502 (JP); MATSUMOTO, Naoto, Isesaki-shi Gunma 372-8502 (JP); TABATA, Masaru, Isesaki-shi Gunma 372-8502 (JP); SATOU, Masaaki, Isesaki-shi Gunma 372-8502 (JP); SHIMAMOTO, Gaku, Isesaki-shi Gunma 372-8502 (JP)
(74) Representative: Haley, Stephen
(86) International application number: PCT/JP2008/062833
(87) International publication number: WO 2009/016966

(57) **Abstract**

A commodity information display apparatus (100) includes a shelf (101) on which a commodity (10) is displayed, and a display unit (140) for displaying the commodity information about the commodity (10). The commodity information about the commodity related to an RFID tag (11) detected by an antenna (110) and a read device (120) is acquired in advance from a store computer (200) and stored in a storage unit (132). When the commodity information is displayed, the information is acquired from the storage unit (132), and displayed on the display unit (140).

## Description

### TECHNICAL FIELD

The present invention relates to a commodity information display system for displaying commodity information about commodities displayed on the shelves of stores.

### BACKGROUND ART

Conventionally, the commodity information display system recited in the patent document 1 is well known. The system recited in the document includes a commodity information read device for reading an RFID tag provided on a shelf on which commodities are displayed, a commodity commercial text display device for displaying commodity commercial text as commodity information, and a survey information management device for survey of commodity movement state etc. interconnected over a network. The survey information management device has a database for storing the commercial text to be displayed on the commodity commercial text display device, and the commercial text stored in the database is transferred and displayed on the commodity commercial text display device depending on the commodity movement state.
PATENT DOCUMENT 1: Japanese Patent Publication 2005-106080

### DISCLOSURE OF THE INVENTION

### PROBLEMS TO BE SOLVED BY THE INVENTION

However, the system recited in the patent document 1 transfers the commodity information from the survey information management device to the commodity commercial text display device each time the commodity information is displayed. Therefore, if there is a large amount of data of the commodity information, a long time is required to transfer the data, thereby possibly causing a delay in starting the display of commodities. In addition, since the data of the commodity information is frequently transferred, network resources are wasted by the data transfer, and there is the possibility of a delay in other data transfer processes in transferring read data of the RFID tag.

The present invention has been developed to solve the above-mentioned problems, and aims at providing a commodity information display system capable of quickly displaying information and effectively utilizing network resources.

### MEANS FOR SOLVING THE PROBLEMS

To attain the above-mentioned advantages, the present application recites a commodity information display system having a shelf on which commodities are arranged and display means for displaying commodity information about the commodities arranged on the shelf. The system includes: a first antenna provided on the shelf for communication with an RFID tag attached to a commodity; first detection means for communicating with the RFID tag through the first antenna, and detecting a unique identifier from the RFID tag; first storage means for storing a list of a unique identifier detected by the first detection means, inventory management means for transmitting inventory information about a commodity obtained by comparing the list of the unique identifier stored in the first storage means with a list of the unique identifier detected by the first detection means to a management computer over a network; second storage means for receiving commodity information corresponding to the unique identifier detected by the first detection means from the management computer, and storing the commodity information; and display control means for retrieving commodity information about a commodity to be information-displayed from the second storage means, and displaying the commodity information on the display means.

According to the present invention, the commodity information about a commodity arranged on the shelf is acquired from the management computer in advance, the commodity information is stored in the second storage means, and the commodity information is retrieved from the second storage means when the information is displayed. Therefore, quick information display can be realized. Additionally, since data of the commodity information is transferred only once per commodity before the initial information display, the network resources can be effectively utilized.

When the information is displayed for the first time or the commodity information stored in the second storage means is deleted for any reason, there can be the possibility that the commodity information is not stored in the second storage means when the information is displayed. In this case according to the present application, if commodity information is not stored in the second storage means when the commodity information is to be displayed, the display control means acquires the commodity information from a management computer, stores the commodity information in the second storage means, and displays the information on the display means.

In addition, when there are a large number of commodity types displayed on a shelf, there can be the possibility that all commodity information cannot be stored in the second storage means. According to the present application, when there is no necessary and available capacity in the second storage means to store the commodity information received from the management computer, the storability of commodity information in the second storage means is determined in the descending order of display frequency. In the present application, when there is no necessary and available capacity to store the commodity information received from the management computer, the storability of the commodity information in the second storage means is determined in the descending order of a larger amount of inventory of commodities.

The timing of displaying commodity information can be determined in various methods. For example, the information is displayed when the inventory management means detects the retrieval of commodity from the shelf. In another example, commodity selection means is provided for selecting a type of a commodity whose commodity information is to be displayed, and the commodity information is displayed when it is detected that the commodity selection means selects the commodity. In a further example, the commodity information is displayed when the management computer issues an information display instruction. In a further example, a second antenna and second detection means are provided, and the commodity information is displayed when the second detection means detects an RFID tag.

### ADVANTAGES OF THE INVENTION

As described above, according to the present invention, the commodity information about a commodity arranged on the shelf is acquired from the management computer in advance, the commodity information is stored in the second storage means, and the commodity information is retrieved from the second storage means when the information is displayed. Therefore, quick information display can be realized. Additionally, since data of the commodity information is transferred only once per commodity before the initial information display, the network resources can be effectively utilized.

### BRIEF DESCRIPTION OF THE DRAWINGS

FIG. 1 shows the configuration of the commodity information display system according to a first embodiment of the present invention;
FIG. 2 is a block diagram showing the function of a showcase;
FIG. 3 is a block diagram showing the function of a store computer;
FIG. 4 shows an example of a commodity information table;
FIG. 5 shows an example of tag correspondence information;
FIG. 6 shows an example of shelf inventory information;
FIG. 7 is a sequence chart describing the process of transferring commodity information;
FIG. 8 shows the configuration of the commodity information display system according to a second embodiment of the present invention;
FIG. 9 is a block diagram of storing data in the central control device; and
FIG. 10 is a block diagram showing the function of a commodity information display device.

### DESCRIPTION OF SYMBOLS

- 10: commodity
- 11: RFID tag
- 100: showcase
- 101: shelf
- 110: antenna
- 120: read device
- 130: central control device
- 132: storage unit
- 135: display control unit
- 140: display unit
- 200: store computer
- 220: information display processing unit
- 230: database
- 400: commodity information display terminal

### BEST MODE FOR CARRYING OUT THE INVENTION

### (First Embodiment)

The commodity information display system according to the first embodiment of the present invention is described below with reference to the attached drawings. In the present embodiment, a showcase having a cooling mechanism is provided with a commodity information display function.

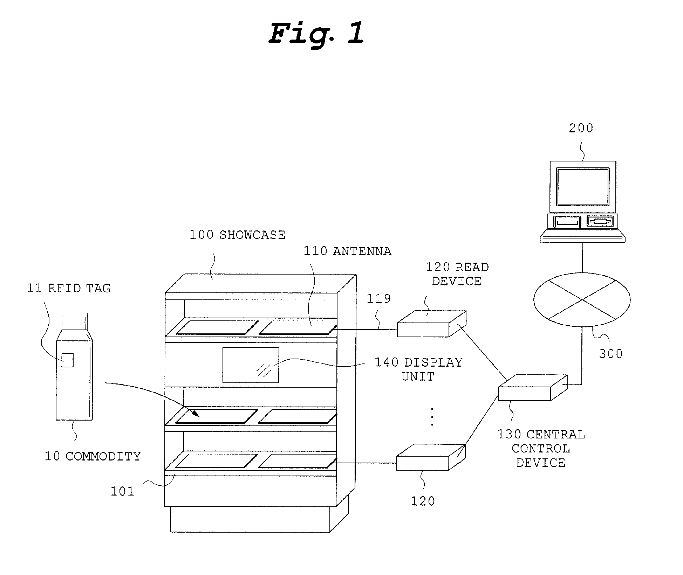

A showcase 100 according to the present embodiment includes, as shown in FIG. 1, a shelf 101 on which commodities 10 are displayed, an antenna 110 for communication with an RFID tag 11 provided for the commodity 10, a plurality of read devices 120 for reading a unique number as a unique identifier of the RFID tag 11 using the antenna 110, and a central control device 130 for centrally controlling each of the read devices 120. On the upper portion of the front surface of the showcase 100, provided is a display unit 140 that is configured by an LCD, a CRT, etc. for displaying the commodity information about the commodity 10. The central control device 130 can communicate with a store computer 200 over a network 300 such as a LAN.

The antenna 110 has a loop antenna coil and an impedance matching circuit in the thin box-shaped housing. One or more antennas 110 (two in the present embodiment) are arranged on the top surface of the shelf 101. Each antenna 110 is connected to the read device 120 via a coaxial cable 119.

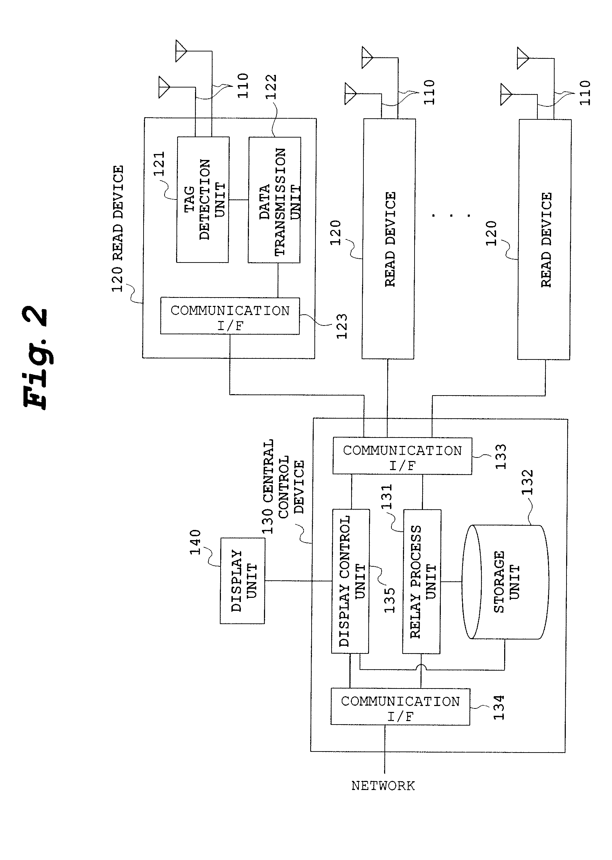

The read device 120 is provided for each shelf 101, and one or more antennas 110 provided for the corresponding shelf 101 is connected. As shown in FIG. 2, each read device 120 is provided with a tag detection unit 121 for reading a unique number from the RFID tag 11 in the communication range of the two connected antennas 110, a data transmission unit 122 for transmitting the unique number of the RFID tag 11 read by each antenna 110 to the central control device 130, and a communication interface 123 for connection to the central control device 130. The tag detection unit 121 repeats the operation of sequentially acquiring the unique number of the RFID tag 11 using one antenna 110, and then sequentially acquiring the unique number of the RFID tag 11 using another antenna 110. Upon receipt of a data transfer request from the central control device 130, the data transmission unit 122 transmits to the central control device 130 a list of the unique numbers of the RFID tags 11 detected by the tag detection unit 121.

The central control device 130 includes a relay process unit 131 for aggregating the unique numbers of the RFID tags 11 acquired from the respective read devices 120 and transmitting the numbers to the store computer 200, a storage unit 132 for storing the commodity information and temporarily storing the unique number, a communication interface 133 for connection to the read device 120, and a communication interface 134 for connection to the network 300. The relay process unit 131 sequentially requests each of the connected read device 120 to transmit data of the unique number. When the relay process unit 131 receives the unique number of the RFID tag 11 from each read device 120, it temporarily stores the unique number in the storage unit 132. When there is a change of the stored data of the unique number, the relay process unit 131 transmits the data to the store computer 200. That is, the relay process unit 131 transmits difference information as inventory information to the store computer 200. In other words, the relay process unit 131 functions as inventory management means for transmitting the inventory information about the commodity 10 to the store computer 200.

The central control device 130 further includes a display control unit 135 connected to the display unit 140 provided at the upper portion of the front surface of the showcase 100. Upon receipt of the commodity information from the store computer 200, the display control unit 135 stores the commodity information in the storage unit 132. Each piece of commodity information stored in the storage unit 132 is identified by a commodity type code for uniquely identifying a commodity type. In the present embodiment, a JAN (Japanese Article Number) code is used. If there is no necessary available capacity for storing the commodity information in the storage unit 132 when the commodity information is received, then (a) the commodity information is not stored but discarded, or (b) any commodity information stored in the storage unit 132 is deleted to reserve an available capacity, and the received commodity information is stored. The determination criteria as to which commodity information is to be stored can be the descending order of the display frequency of the commodity information, the descending order of the amount of the inventory of commodities, etc.

Upon receipt of a display request of commodity information from the store computer 200, the display control unit 135 retrieves the commodity information from the storage unit 132 according to the JAN code included in the display request, and displays the commodity information on the display unit 140. When the commodity information is not stored in the storage unit 132, the display control unit 135 transmits a transfer request of the commodity information to the store computer 200, and displays on the display unit 140 the commodity information received from the store computer 200 in response to the transfer request. The process performed on the received commodity information is the same as that described above. That is, the information is normally stored in the storage unit 132, but may not be stored therein depending on the available capacity of the storage unit 132 etc.

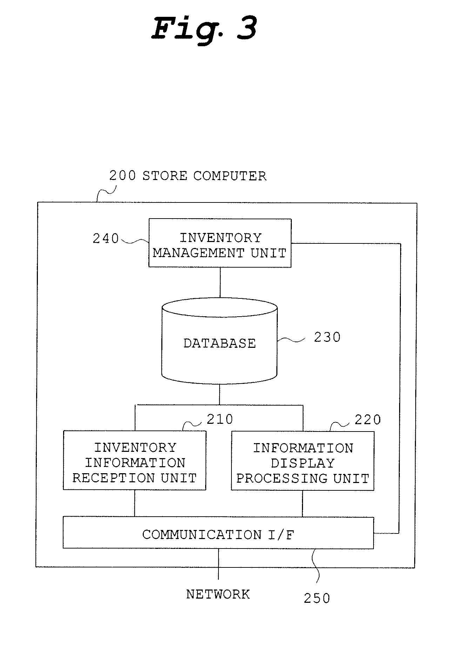

Next, the store computer 200 is described with reference to FIG. 3. As shown in FIG. 3, the store computer 200 includes an inventory information reception unit 210 for acquiring the inventory state of the showcase 100, an information display processing unit 220 for providing commodity information for the showcase 100, a relational database 230 as storage means for storing various types of information, an inventory management unit 240 for managing inventory on the basis of the data stored in the database 230, and a communication interface 250 for connection to the network 300.

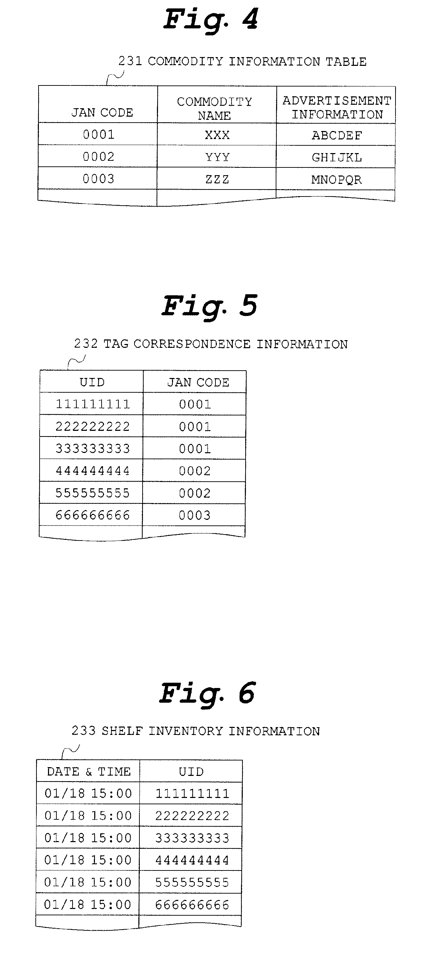

The data stored in the database 230 is described below. The database 230 records a commodity information table 231 shown in FIG. 4, tag correspondence information 232 shown in FIG. 5, and shelf inventory information 233 shown in FIG. 6.

As shown in FIG. 4, the commodity information table 231 records a JAN code of the commodity 10 dealt in a store, and commodity information about the commodity 10. In the present embodiment, the names of a commodity and advertisement information stored in a binary format are stored. The commodity information table 231 is input in advance before starting the operation of the inventory management system, and is updated depending on the addition of dealt commodities, a change of the contents of an advertisement, etc. Each piece of data of the commodity information table 231 can be input in each store, or from a management computer (omitted in the attached drawings) for centrally managing a plurality of store computers 200 over a network.

The tag correspondence information 232 stores the correspondence between the RFID tag 11 attached to the commodity 10 and the commodity type of the commodity 10, and stores a pair of the unique number ("UID" in FIG. 5) of the RFID tag 11 and the JAN code as shown in FIG. 5. The tag correspondence information 232 is registered when, for example, the commodity 10 is delivered to the store.

The shelf inventory information 233 stores the unique number of the RFID tag 11 of the commodity 10 displayed in each showcase 100. As shown in FIG. 6, it stores the date and time when the unique number is acquired, and the unique number of the RFID tag 11. The shelf inventory information 233 is updated by the inventory information reception unit 210.

Upon receipt of the unique number of the RFID tag 11 of the commodity 10 displayed in the showcase 100, the inventory information reception unit 210 stores in the database 230 the number together with the reception date and time as the shelf inventory information 233.

The information display processing unit 220 monitors the shelf inventory information 233 in the database 230, retrieves from the commodity information table 231 the commodity information about the commodity 10 displayed in the showcase 100, and transmits the commodity information to the showcase 100. The commodity information is transmitted for each commodity type, that is, for each JAN code. The information display processing unit 220 monitors the shelf inventory information 233 of the database 230. If it detects that the commodity 10 has been taken out of the shelf 101, that is, if it detects that the RFID tag 11 that was detected as the inventory is not recognized, then the unit refers to the tag correspondence information 232, acquires the JAN code corresponding to the unique number of the RFID tag 11, and transmits the information display request including the JAN code to the showcase 100. In addition, upon receipt of a transfer request of the commodity information from the showcase 100, the information display processing unit 220 retrieves the commodity information from the database 230 in response to the transfer request, and transfers the commodity information to the showcase 100.

The inventory management unit 240 provides various inventory management services on the basis of the data stored in the database 230 in response to the requests from store employees etc. A practical function of an inventory management unit 160 can be (a) the function of browsing and updating each piece of information stored in the database 230, (b) the function of browsing each piece of information in the database 230 in cooperation with each other, (c) the function of issuing an out-of-stock warning, and (d) the function of grasping purchasing behavior of uses.

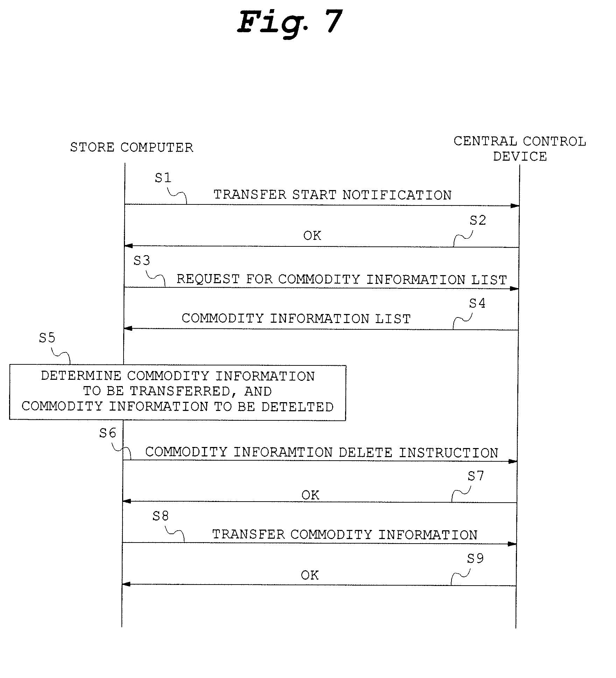

Next, the process of transferring commodity information from the store computer 200 to the central control device 130 of the showcase 100 is described below with reference to FIG. 7. FIG. 7 is a sequence chart of the process of transferring commodity information.

The process of transferring commodity information is performed when the commodity information table 231 of the store computer 200 is updated, when a displayed commodity in the showcase 100 is changed or periodically. First, the store computer 200 notifies the central control device 130 of the start of the transfer process (step S1). The central control device 130 returns a transfer start OK answer in response to the notification (step S2). Next, the store computer 200 requests the central control device 130 to transmit a list of stored commodity information (step S3). The central control device 130 generates a list of commodity information stored in the storage unit 132 for each commodity type code, and returns the list to the store computer 200 (step S4).

Next, the store computer 200 refers to the received list of commodity information, the shelf inventory information 233, and the tag correspondence information 232, and determines the commodity information to be deleted from the storage unit 132 of the central control device 130, and the commodity information to be transferred to the central control device 130 (step S5). Practically, relating to the commodity in the shelf inventory information 233 but not stored in the storage unit 132 of the central control device 130, it is determined that the commodity information is to be transferred. On the other hand, relating to the commodity not in the shelf inventory information 233, but stored in the storage unit 132 of the central control device 130, it is determined that the commodity information is to be deleted. Then, the store computer 200 transmits a delete instruction including the commodity type code to the central control device 130 (step S6). The central control device 130 deletes from the storage unit 132 the corresponding commodity information in response to the delete instruction, and returns a deletion completion answer to the store computer 200 (step S7). Next, the store computer 200 transfers the commodity information including the commodity type code, the advertisement information, etc. to the central control device 130 (step S8). Upon receipt of the commodity information, the central control device 130 stores the commodity information in the storage unit 132, and returns a storage completion answer to the store computer 200 (step S9). Thus, the process of transferring commodity information is completed.

Since the showcase 100 according to the present embodiment has already stored the commodity information in the storage unit 132 of the central control device 130 upon receipt of the display request of the commodity information from the store computer 200, the information can be quickly displayed on the display unit 140, thereby effectively utilizing the network resources.

In the above-mentioned embodiment, the commodity information is displayed on the basis of a display request from the store computer 200, but the commodity information can also be displayed by other triggers.

For example, when the relay process unit 131 detects that the commodity 10 has been retrieved from the shelf 101, the display control unit 135 of the showcase 100 can retrieve the commodity information about the commodity 10 from the storage unit 132 and display the information on the display unit 140. The storage unit 132 stores the commodity information for each JAN code as an identifier of a commodity type. Therefore, it is necessary for the display control unit 135 to acquire a JAN code from the unique number of the RFID tag 11. To solve the problem, a correspondence table between the unique number of the RFID tag 11 and the JAN code can be stored in the storage unit 132. Otherwise, the unique number corresponding to the RFID tag 11 can be inquired to the store computer 200.

In addition to the antenna 110 and the read device 120 for the commodity 10 provided for the shelf 101, an antenna and read device are provided for display of commodity information, for example, so that the commodity information about the commodity 10 detected by the antenna and the read device can be displayed on the display unit 140. In this case, it is necessary for the display control unit 135 to acquire a JAN code from the unique number of the RFID tag 11. To solve the problem, the correspondence table between the unique number of the RFID tag 11 and the JAN code can be stored in the storage unit 132. Otherwise, the unique number corresponding to the RFID tag 11 can be inquired to the store computer 200.

In addition, selection means for selecting the commodity 10 whose commodity information is to be displayed is further provided, and the commodity information about the commodity 10 selected by the selection means can be displayed on the display unit 140. The selection means can be, for example, a switch provided for each commodity type, a touch panel incorporated into the display unit 140, etc.

### (Second Embodiment)

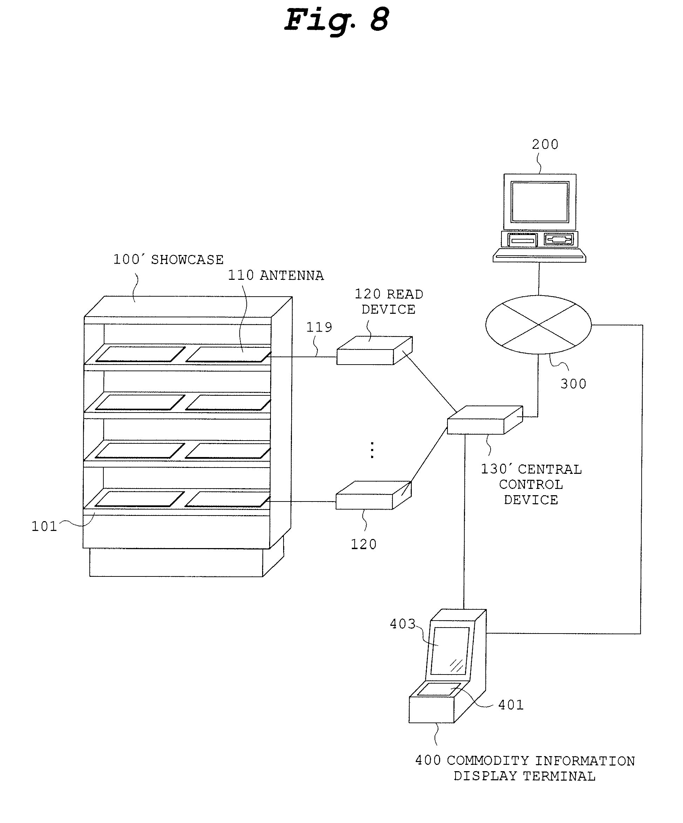

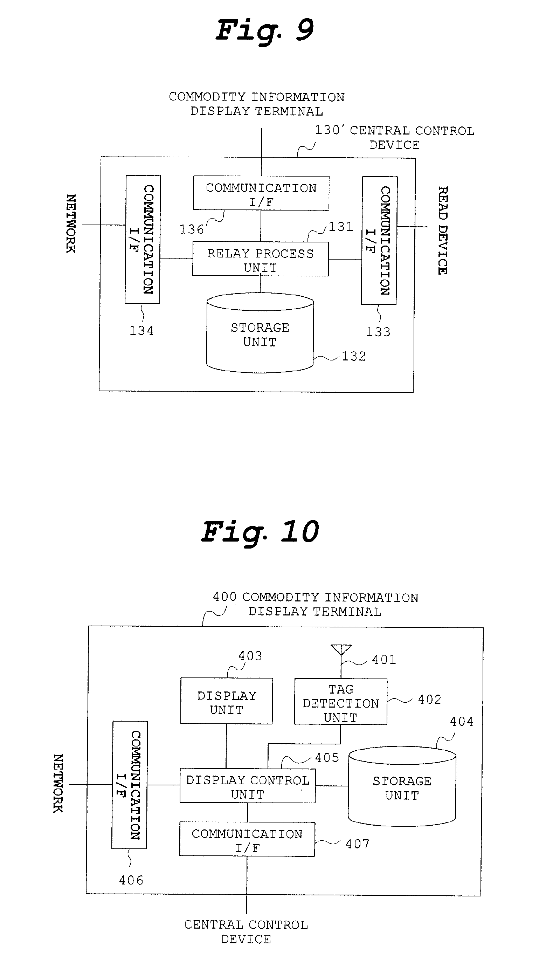

The commodity information display system according to the second embodiment of the present invention is described below with reference to the attached drawings. FIG. 8 shows the configuration of the commodity information display system. FIG. 9 is a block diagram showing the function of the central control device. FIG. 10 is a block diagram showing the function of the commodity information display apparatus. The difference of the commodity information system according to the present embodiment from the first embodiment is that commodity information is displayed on the commodity information display apparatus provided separately from the showcase. The difference is mainly described below in detail.

In the commodity information system according to the present embodiment, as shown in FIG. 8, a showcase 100', the commodity information display apparatus 400, and the store computer 200 are connected for communications among them over the network 300.

The showcase 100' is obtained by removing the commodity information display function from the showcase 100 according to the first embodiment. Practically, the display unit 140 is removed from the showcase 100 according to the first embodiment. Correspondingly, the configuration of the central control device 130' is also difference from that according to the first embodiment. Practically, as shown in FIG. 9, the display control unit 135 is removed from the central control device 130 according to the first embodiment, and the device includes a relay process unit 131 for adding up the unique numbers of the RFID tags 11 acquired from the read device 120 and transmitting it to the store computer 200, a storage unit 132 for temporarily storing a unique number and tag correspondence information, a communication interface 133 for connection to the read device 120, a communication interface 134 for connection to the network 300, and a communication interface 136 for connection to the commodity information display apparatus 400.

The tag correspondence information stored in the storage unit 132 is a correspondence table between the unique number of the RFID tag 11 and the commodity type code of the commodity 10 to which the RFID tag 11 is attached. In the present embodiment, a JAN code is used as a commodity type code. The tag correspondence information is a replica of the tag correspondence information 232 managed in the store computer 200, and stores the information transferred from the store computer 200.

The relay process unit 131 sequentially requests each of the connected read device 120 to transmit data of the unique number. When the relay process unit 131 receives the unique number of the RFID tag 11 from each read device 120, it temporarily stores the unique number in the storage unit 132. When there is a change of the stored data of the unique number, the relay process unit 131 transmits the data to the store computer 200. That is, the relay process unit 131 transmits difference information as inventory information to the store computer 200. In other words, the relay process unit 131 functions as inventory management means for transmitting the inventory information about the commodity 10 to the store computer 200. In addition, the relay process unit 131 determines that the commodity 10 has been taken out of the shelf 101 on the basis of the list of the unique numbers of the RFID tags 11 received from the read device 120 and the list of the unique numbers temporarily stored in the storage unit 132. Then, the relay process unit 131 acquires the commodity type code of the taken out commodity 10 from the tag correspondence table of the storage unit 132, and transmits a commodity information display request including the commodity type code to the commodity information display apparatus 400. The commodity information display request is transmitted directly to the commodity information display apparatus 400 through the communication interface 136 not over the network 300.

As shown in FIG. 10, the commodity information display apparatus 400 includes an antenna 401 for communication with the RFID tag 11 of the commodity 10, a tag detection unit 402 for detecting a unique number from the RFID tag 11 of the commodity 10 close to the antenna 401, a display unit 403 for displaying the information about the commodity 10, a storage unit 404 for storing the commodity information to be displayed on the display unit 403 and the tag correspondence information, a display control unit 405 for controlling display of the commodity information on the display unit 403, a communication interface 406 for connection to the network 300, and a communication interface 407 for connection to a central control device 130'.

Upon receipt of the commodity information from the store computer 200, the display control unit 405 stores the commodity information in the storage unit 404. Each piece of commodity information stored in the storage unit 404 is identified by a commodity type code for uniquely identifying a commodity type. In the present embodiment, a JAN code is used. In the display control unit 405, if there is no necessary available capacity for storing the commodity information in the storage unit 404 when the commodity information is received, then (a) the commodity information is not stored but discarded, or (b) any commodity information stored in the storage unit 404 is deleted to reserve an available capacity, and the received commodity information is stored. The determination criteria as to which commodity information is to be deleted can be the descending order of the display frequency of the commodity information, the descending order of the amount of the inventory of commodities, etc. The amount of inventory can be acquired from the store computer 200.

The display control unit 405 acquires a commodity type code from the storage unit 404 using as a key a unique number of the RFID tag 11 read by the tag detection unit 402. Next, the display control unit 405 retrieves the commodity information from the storage unit 404 using the commodity type code as a key, and displays the information on the display unit 403. Furthermore, upon receipt of a display request of commodity information from the central control device 130' or the store computer 200, the display control unit 405 retrieves the commodity information from the storage unit 404 on the basis of the commodity type code included in the display request, and displays the commodity information on the display unit 403.

If the commodity information is not stored in the storage unit 404 when the process of displaying commodity information is performed, then the display control unit 405 transmits a transfer request of the commodity information to the store computer 200, and displays on the display unit 403 the commodity information received from the store computer 200 in response to the transfer request. The process performed on the commodity information received from the store computer 200 is the same as that described above. That is, the information is normally stored in the storage unit 404, but may not be stored therein depending on the available capacity of the storage unit 404 etc.

The configuration of the store computer 200 is similar to that according to the first embodiment, but the operation is different. The differences are mainly described below in detail. The information display processing unit 220 of the store computer 200 monitors the shelf inventory information 233 of the database 230, retrieves the commodity information about the commodity 10 displayed in the showcase 100' from the commodity information table 231, and transmits the commodity information to the commodity information display apparatus 400. The commodity information is transmitted for each commodity type, that is, for each JAN code. Upon receipt of a transfer request of commodity information from the commodity information display apparatus 400, the information display processing unit 220 retrieves the commodity information from the database 230 in response to the transfer request, and transfers the commodity information to the commodity information display apparatus 400. The process of transferring commodity information from the store computer 200 to the commodity information display apparatus 400 is the same as the process of transferring the commodity information from the store computer 200 to the central control device 130 of the showcase 100 according to the first embodiment. Other configurations and operations are similar to those according to the first embodiment.

According to the commodity information display system of the present embodiment, when a display request of commodity information is received from the central control device 130' of the showcase 100' or the store computer 200 in the commodity information display apparatus 400, the storage unit 404 of the commodity information display apparatus 400 already stores the commodity information. Therefore, the information can be quickly displayed on the display unit 403 of the commodity information display apparatus 400, and network resources can be effectively utilized.

In the present embodiment, the showcase 100' is connected to the commodity information display apparatus 400 to transmit a display request of commodity information without the network 300, but the display request of the commodity information can also be transmitted over the network 300. In addition, when the network 300 is used, the store computer 200 can also relay the display request.

In the present embodiment, the commodity information display apparatus 400 displays commodity information when a display request is received from the central control device 130' of the showcase 100' or from the store computer 200, and when the commodity 10 is moved close to the antenna 401 to read the unique number of the RFID tag 11. However, the commodity information can be displayed by other triggers. For example, selection means for selecting a commodity type is provided for the commodity information display apparatus 400 to display the commodity information about a commodity selected by the selection means. There can be various types of selection means, but it is preferable to use a touch panel incorporated into the display unit 403.

The commodity information display system according to the embodiments of the present invention is described above in detail. However, the present invention is not limited to those embodiments. For example, a showcase having a cooling mechanism is described in the above-mentioned embodiment, a common shelf without a cooling function can realize the present invention.

## Claims

1. A commodity information display system having a shelf on which commodities are arranged and display means for displaying commodity information about the commodities arranged on the shelf, comprising:
a first antenna provided on the shelf for communication with an RFID tag attached to a commodity;
first detection means for communicating with the RFID tag through the first antenna, and detecting a unique identifier from the RFID tag;
first storage means for storing a list of the unique identifier detected by the first detection means;
inventory management means for transmitting inventory information about the commodity obtained by comparing the list of the unique identifier stored in the first storage means with a list of the unique identifier detected by the first detection means to a management computer over a network;
second storage means for receiving commodity information corresponding to the unique identifier detected by the first detection means from the management computer, and storing the commodity information; and
display control means for retrieving the commodity information about the commodity to be information-displayed from the second storage means, and displaying the commodity information on the display means.

2. The commodity information display system according to claim 1, wherein:
the shelf is provided with the first antenna, the first detection means, the first storage means, and the inventory management means;
a commodity information display apparatus provided separate from the shelf is provided with the display means, the second storage means, and the display control means; and
the shelf is connected to the commodity information display apparatus to perform communications between the shelf and the apparatus.

3. The commodity information display system according to claim 1, wherein
the shelf is provided with the first antenna, the first detection means, the first storage means, the inventory management means, the display means, the second storage means, and the display control means.

4. The commodity information display system according to claim 2, wherein:
the commodity information display apparatus is provided with a second antenna for communication with the RFID tag attached to the commodity whose commodity information is to be displayed, and second detection means for communicating with the RFID tag through the second antenna and detecting the unique identifier from the RFID tag; and
the display control means displays the commodity information about the commodity related to the unique identifier detected by the second detection means on the display means.

5. The commodity information display system according to any one of claims 1 to 4, wherein:
the inventory management means detects the commodity taken out of the shelf, and notifies the display control means of the unique identifier of the commodity; and
the display control means displays the commodity information about the commodity related to the unique identifier received from the inventory management means on the display means.

6. The commodity information display system according to any one of claims 1 to 4, further comprising
commodity selection means for selecting a commodity type whose commodity information is to be displayed; and
the display control means displays the commodity information about the commodity selected by the commodity selection means on the display means.

7. The commodity information display system according to any one of claims 1 to 4, wherein
the display control means displays on the display means the commodity information about the commodity specified by an information display instruction from the management computer.

8. The commodity information display system according to any one of claims 1 to 4, wherein
the display control means acquires the commodity information from the management computer when the commodity information is not stored in the second storage means when the commodity information is displayed, stores the commodity information in the second storage means, and displays the commodity information on the display means.

9. The commodity information display system according to any one of claims 1 to 4, wherein
the display control means determines whether or not the commodity information can be stored in the second storage means in a descending order of a display frequency when the second storage means has no necessary available capacity to store the commodity information received from the management computer.

10. The commodity information display system according to any one of claims 1 to 4, wherein
the display control means determines whether or not commodity information can be stored in the second storage means in a descending order of an amount of inventory of the commodity when the second storage means has no necessary available capacity to store the commodity information received from the management computer.
